# EUROPÄISCHE PATENTSCHRIFT

(11) **EP 0 215 481 B1**
(45) Veröffentlichungstag und Bekanntmachung des Hinweises auf die Patenterteilung: **21.04.1993**
(21) Anmeldenummer: 86112867.6
(22) Anmeldetag: 17.09.1986
(51) Int. Cl.: G01S 13/52

(54) **Puls-Doppler-Radargerät mit digitaler Signalverarbeitung**
Pulse Doppler radar device using digital signal processing
Dispositif radar Doppler à impulsions et à traitement numérique de signaux

(30) Priorität: 20.09.1985 DE 3533650
(43) Veröffentlichungstag der Anmeldung: 25.03.1987
(73) Patentinhaber: SIEMENS AKTIENGESELLSCHAFT, 80333 München (DE)
(72) Erfinder: Ritter, Gerhard, Dipl.-Ing., D-8911 Thaining (DE)

(56) Entgegenhaltungen:
- EP-A- 0 100 012
- US-A- 4 003 052
- IEEE, TRANSACTIONS ON AEROSPACE AND ELECTRONICS SYSTEMS, Band AES-15, Nr. 4, Juli 1979, Seiten 508-517, IEEE, New York, US; R.N. O'DONNELL et al.: "Automated tracking for aircraft surveillance radar systems"
- IEE PROCEEDINGS-E, Band 127, Nr. 4, Juli 1980, Seiten 109-118, Stevenage, Herts, GB; P. CORSINI et al.: "Special-purpose computer for video signal processing in radar systems"
- ELECTRONIC PROGRESS, Band 17, Nr. 1, Frühjahr 1975, Seiten 24-30, Lexington, US; R.H. DALY et al.: "Digital signal processing for radar

## Beschreibung

Die Erfindung bezieht sich auf ein Puls-Doppler-Radargerät gemäß dem Oberbegriff des Patentanspruchs 1.

Ein solches Puls-Doppler-Radargerät ist aus IEEE TRANSACTIONS ON AEROSPACE AND ELECTRONIC SYSTEMS, Band AES-15, Nr. 4, Juli 1979, Seiten 508-517, IEEE, New York, US; R:N. O'DONNEL et al.: "Automated tracking for aircraft surveillance radar systems" bekannt. Der hierbei verwendeten Bewegtzieldetektor (Moving Target Detektor MTD) weist mehrere parallel geschaltete Prozessormodule auf, und gibt die festgestellten Schwellenüberschreitungen als Zielmeldungen an einen sogenannten Post-Prozessor. Durch die Prozessormodule ist eine Doppelpulsunterdrückung und eine Mehrzahl von Filtern realisiert. Die Filter dienen zur Dopplerverarbeitung und zur Durchführung von Algorithmen zur Signalbearbeitung.

Nach Einführung der digitalen Signalverarbeitung, die über die kohärente Signalauswertung eine optimale Zielentdeckung bei Radargeräten ermöglicht, wird auch die Anwendung digitaler Prozessoren für die Weiterverarbeitung der Radarsignale angestrebt. Eine derartige Weiterverarbeitung der Radarsignale ist jedoch mit Rücksicht auf einen vertretbaren Aufwand nur bis zu einer relativ begrenzten Arbeitsgeschwindigkeit möglich. Durch den Einsatz von Prozessoren bietet sich die Anwendung intelligenterer Algorithmen an, wodurch eine bessere Extraktion der in den Radarechos enthaltenen Information ermöglicht wird.

Der Erfindung liegt die Aufgabe zugrunde, eine den aktuellen Bedingungen der natürlichen und absichtlichen Störsignale, wie z.B. Festzeichenechos, Regenechos und aktiven Störern angepaßte flexible Puls-Doppler-Auswertung und die Detektion interessierender Ziele, die eine charakteristische Dopplerverschiebung aufweisen, zu verbessern.

Gemäß der Erfindung wird diese Aufgabe durch die in Patentanspruch 1 angegebenen Merkmale gelöst.

Während die Vorverarbeitung der Radarsignale im wesentlichen in einer Filterbank oder einer Anordnung zur Fast-Fourier-Transformation erfolgt, soll das Prozessorsystem für die Nachverarbeitung nicht nur eine universelle Verwendbarkeit, sondern auch eine frei programmierbare Radarsignalauswertung ermöglichen. Die universelle Verwendbarkeit verlangt neben der Realisierungsmöglichkeit unterschiedlicher Verarbeitungsalgorithmen auch die Möglichkeit, die Verarbeitungsleistung und damit den Aufwand an die jeweilige Anwendung anpassen zu können. Das Prozessorsystem sieht die Möglichkeit vor, eine variable Anzahl gleicher Porzessoren über verschiedene Bus-Systeme parallel zu schalten, die mit ihrer Umwelt kommunizieren können. Im Multiprozessorsystem wird nach bestimmten Kriterien, anhand welcher die übertragenen Spektren analysiert werden, entschieden, ob es sich um das Echo eines interessierenden Objektes oder um ein Störsignal handelt. Diese Kriterien müssen nicht unveränderbar sein, sondern können im Regelfall den aktuellen Störverhältnissen angepaßt sein. Die Steuerung des Ablaufes und die Einstellung von Parametern für Sender, Empfänger sowie für die Vorverarbeitung kann von einer eigenen Ablaufsteuerung oder vom Prozessorsystem selbst übernommen werden. Im Multiprozessorsystem werden außer einem Bus zur Dateneingabe von der Vorverarbeitung und einem Bus zur Weitergabe der Zielmeldungen ein weiterer Bus als Verbindung mit einer Speichereinrichtung verwendet. Eine Aufgabe dieser Speichereinrichtung stellt die Korrelation von Zielmeldungen in benachbarten Winkelbereichen und/oder über einen oder mehrere Antennenumläufe dar.

Gemäß einer vorteilhaften Weiterbildung der Erfindung kann dem Multiprozessorsystem ein weiterer Bus zur Verfügung gestellt werden, der mit einer weiteren Speichereinrichtung in Verbindung steht und auf die die Signalvorverarbeitung über denselben Bus oder über einen eigenen Bus Zugriff hat.

Gemäß einer weiteren vorteilhaften Weiterbildung der Erfindung kann die Vorverarbeitung der Radarsignale und die entfernungsselektive Vorbehandlung durch ein eigenes Multi-Prozessorsystem erfolgen.

Die Erfindung und weitere Einzelheiten der Erfindung werden anhand der Figuren 1 bis 4 beispielhaft erläutert.

Es zeigen
- Fig. 1: ein Blockschaltbild der Radarsignalauswertung mit je einer Anordnung zur Rohsignalverarbeitung und zur Nachverarbeitung,
- Fig. 2: ein Blockschaltbild eines Multiprozessorsystems für die Radarsignalauswertung,
- Fig. 3: ein Blockschaltbild einer weiteren Ausführungsform für die Radarsignalauswertung und
- Fig. 4: ein geändertes Ausführungsbeispiel für die Vorverarbeitung.

Die Aufgaben der Radarsignalauswertung lassen sich in zwei Aufgabenbereiche einteilen, die Vorverarbeitung und die Nachverarbeitung. Aufgabe der Vorverarbeitung ist im wesentlichen die Analyse der Echos im Dopplerbereich mit Hilfe einer Filterbank, die als echte Filterbank oder als FFT-Analyse realisiert sein kann und die Schwellensteuerung. Aufgabe der Nachverarbeitung ist zunächst, die möglichst weitgehende Elimination von Falschalarmen und die Plotbildung mit Schärfung im Winkel und der Entfernung. Außerdem können in der Nachverarbeitung vom jeweiligen Einsatzfall abhängige weitergehende Vorverarbeitungen notwendig werden, wie Dopplerschärfung, Korrelation mit Sekundär-Radar Meßwerten, Clutteradaption, Überreichweitenelminimation.

In der Vorverarbeitung ist eine hohe Verarbeitungsgeschwindigkeit die primäre Anforderung, da alle mit dem Entfernungtortakt anfallenden Daten einer umfangreichen Verarbeitung zu unterziehen sind. Bei einer FFT-Verarbeitung müssen als Parameter z.B. die Anzahl der kohärent verarbeiteten Pulse, die Art der Wichtung und bei der Echoverarbeitung eine burstweise oder überlappende Art wählbar sein. In der Nachverarbeitung ist die Eingangsdatenrate gegenüber der Vorverarbeitung durch Schwellenbildung stark reduziert, wodurch die weitere Verarbeitung durch Prozessoren vereinfacht wird. Soweit die Verarbeitunsleistung verfügbarer Prozessoren ausreicht, kann sowohl die Vorverarbeitung als auch die Nachverarbeitung unter Verwendung von Prozessoren erfolgen.

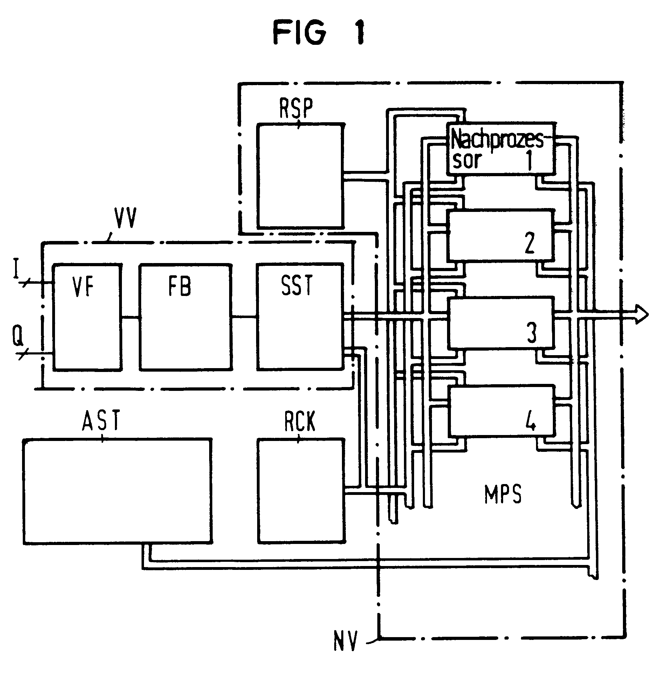

Im Ausführungsbeispiel nach Fig. 1 ist die Verwendung eines Multiprozessorsystems nur für die Nachverarbeitung vorgesehen. Die Anordnung zur Vorverarbeitung VV besteht aus einer Vorfilterung VF und einer Filterbank (bzw. ein FFT-Analysator) FB. Außerdem gehören zur Vorverarbeitung eine Schwellensteuerung SST und eine Rest-Clutter-Karte RCK. Auf die Vorverarbeitung VV folgt die Nachverarbeitung NV unter Verwendung eines Multi-Prozessor-Systems MPS mit einem Rohzielspeicher RSP und einer zugehörigen Ablaufsteuerung AST.

Die am Eingang der Vorfilterung VF zugeführten digitalisierten Signale der beiden Quadraturkanäle I und Q werden aus nicht dargestellten Quadraturdetektoren und Analog/Digital-Wandlern zugeführt.

Die Vorfilterung VF dient im wesentlichen der Einzelpulsunterdrückung. Wahlweise kann in Gebieten mit starkem Bodenclutter ein Filter zur Clutterunterdrückung zugeschaltet werden. Zur Verbesserung der Unterdrückung von Festzeichenechos werden die empfangenen Echos entfernungsselektiv durch eine Filtereinrichtung mit mindestens einem Dämpfungspol für die Frequenz Null vorbehandelt, bevor die Fourier-Transformation ausgeführt wird.

In der Schwellensteuerung (SST) wird durch entsprechende Mittelwertbildung über benachbarte Entfernungstore für jeden Dopplerkanal eine Schwelle für das aktuelle Entfernungstor gebildet. Erfolgt eine Schwellenüberschreitung in einem Dopplerkanal, so wird das Spektrum in dem aktuellen Entfernungstor (alle Dopplerkanäle) einschließlich der Schwellen in den Dopplerkanälen an die folgende Nachverarbeitung übergeben. Die Schwellensteuerung SST kann wahlweise eine Begrenzung der Anzahl der in einem Block zulässigen Anzahl von Zielmeldungen bewirken. Diese Begrenzung erfolgt dann derart, daß die innerhalb eines Blockes an die Nachverarbeitung NV übertragene Datenmenge begrenzt wird. Auch bei intelligente Störern wird eine Überlastung der Nachverarbeitung NV vermieden und dafür blockweise die ausgewertete Reichweite reduziert. Die Ablaufsteuerung AST erhält aus der Nachverarbeitung NV ständig Informationen über den aktuellen Verlauf der Auswertung, so daß eine sektorweise Anpassung der Betriebsart und der Verarbeitung vorgenommen werden kann.

Zusammen mit der Restclutter-Karte RCK sind mehrere verschiedene Betriebsarten der Schwellensteuerung SST möglich. Einerseits können winkel- und entfernungsselektive Schwellenanhebungen der einzelnen Dopplerkanäle vorgenommen werden. Weiter können ebenfalls winkel- und entfernungsselektiv einzelne Dopplerkanäle für Zielmeldungen gesperrt werden. Außerdem enthält die Restclutter-Karte die Information, in welchen Auflösungszellen kein Clutter vorhanden ist und damit eine Zielmeldung auch bei nicht dopplerverschobenen Echos zulässig ist.

Die Nachverarbeitung der Zielmeldungen erfolgt durch ein Multiprozessorsystem MPS aus identischen Prozessorbaugruppen 1 bis 4, die über verschiedene Bussysteme mit ihrer Umwelt kommunizieren. Dazu gehören wenigstens ein Bus zur Dateneingabe von der vorgeschalteten Verarbeitung und ein Bus zur Weitergabe der Ziel-Meldungen. Erweitert ist das Multiprozessorsystem MPS durch einen sogenannten Rohzielspeicher RSP, auf den alle Prozessoren 1 bis 4 über einen weiteren Bus Zugriff haben. Der Rohzielspeicher RSP dient einerseits der Korrelation von Zielmeldungen in benachbarten Winkelbereichen und/oder über einen oder mehrere Antennenumläufe. Andererseits dient dieser Rohzielspeicher RSP der Ablage von Ergebnissen der einzelnen Verarbeitungsschritte und damit der Kommunikation der einzelnen Verarbeitungsschritte. Im Multiprozessorsystem MPS wird nach bestimmten Kriterien, mit denen die übertragenen Spektren analysiert werden, entschieden, ob es sich um das Echo eines interessierenden Objektes oder ein Störsignal gehandelt hat. Diese Kriterien müssen nicht unveränderlich sein und werden im Regelfall den aktuellen Störverhältnissen angepaßt. Die Steuerung des Ablaufs und die Einstellung von Parametern für Sender und Empfänger kann von einer eigenen Ablaufsteuerung AST oder vom Multiprozessorsystem MPS selbst übernommen werden.

Die parallele Hardware-Struktur aus beispielsweise vier identischen Prozessor-Baugruppen 1 bis 4 bietet Vorteile in bezug auf die Hardware-Entwicklung, Fehlertoleranz, Logistik und über die Anzahl der Prozessor en eine wählbare Verarbeitungsleistung. Die Gesamtverarbeitung wird aufgeteilt in Teilverarbeitungen, die jeweils von einer Prozessorgruppe durchgeführt werden. Die Anzahl der Prozessoren einer Prozessorgruppe wird durch die erforderliche Verarbeitungsleistung für diese Teilverarbeitung bestimmt. Eine Prozessorgruppe kann auch aus einem einzelnen Prozessor bestehen. Ergebnisse werden dann jeweils als Datensätze im Rohzielspeicher RSP abgelegt und dienen der nächsten Teilverarbeitung als Eingangsdaten. Die aus der Vorverarbeitung anfallenden Schwellenüberschreitungen werden in der ersten Teilverarbeitung von der ersten Prozessorgruppe auf ihre Wahrscheinlichkeit untersucht und grob klassifiziert.

Bei einer Schwellenüberschreitung werden sowohl das Spektrum, in Form der einzelnen Filterwerte als auch die Schwellen in den einzelnen Filtern übertragen. Damit können verschiedene Kriterien für die Annahme, daß eine Schwellenüberschreitung durch ein Nutzsignal ausgelöst wurde, überprüft werden. Solche Kriterien, die ein Maß für die Abweichung von Störsignalen bilden, sind die Größe und Art der Abweichung von der Umgebung, das Maß der Abweichung von einem Clutter-Spektrum und das Maß der Abweichung von einem Rauschspektrum. Als weiteres Kriterium kann die Übereinstimmung des Spektrums mit den Spektren erwarteter Nutzziele, z.B. das Maß der Übereinstimmung mit dem erwarteten Spektrum einer Düsenmaschine oder eines Hubschraubers herangezogen werden. Aus diesen Einzelkriterien läßt sich ein Summenkriterium für die Wahrscheinlichkeit bilden, daß eine Schwellenüberschreitung durch ein Nutzsignal verursacht wurde.

Eine zweite Prozessorgruppe faßt die Datenblöcke eines Zieles zusammen, das in mehreren Entfernungstoren und in benachbarten Blöcken Schwellenüberschreitungen auslösen kann.

In einer dritten Prozessorgruppe erfolgt eine Schwerpunktbildung der Zieldatensätze und damit eine Schärfung in Azimut und Entfernung. Weitere Prozessorgruppen können z.B. eine Feinklassifizierung oder andere anwendungsspezifische Verarbeitungen ausführen. Als letzte Teilverarbeitung erfolgt die Ausgabe über den Plot-Daten-Bus.

Für die Aufgaben der Ablaufsteuerung AST kann ein durch ein Mikroprogramm gesteuerter Prozessor eingesetzt werden, um eine optimale Anpassung der Verarbeitung an die aktuellen Verhältnisse zu erreichen.

Dem Multi Prozessor System MPS kann ein weiterer Bus zugeordnet werden, der mit einer weiteren nicht dargestellten Speichereinrichtung in Verbindung steht. Der Zugriff auf diese Speichereinrichtung kann auch von der vorgeschalteten Verarbeitung über denselben Bus oder über einen eigenen Bus vorgesehen sein. Diese Speichereinrichtung dient dem Zweck, bereichsweise festzulegen, ab welcher unteren Grenzfrequenz die Echospektren analysiert werden. Gleichzeitig können Bereich von der weiteren Verarbeitung ausgeschlossen werden (Rest-Clutter-Karte).

Um im Multiprozessorsystem MPS Fehlertoleranz zu erhalten, kann nur ein Teil der Prozessoren die aktive Verarbeitung ausführen. Der andere Teil der Prozessoren dient zur Überwachung der aktiven Prozessoren bzw. als Reserve für den Fehlerfall. Die Überwachung der aktiven Prozessoren kann derart erfolgen, daß jeweils zwei Überwachungsprozessoren die gleiche Teilverarbeitung ausführen wie ein aktiver Prozessor. Durch Vergleich der Ergebnisse kann auf eine fehlerfreie bzw. fehlerhafte Arbeitsweise des überwachten Prozessors geschlossen werden. Ein fehlerhaft arbeitender Prozessor wird durch einen Reserveprozessor ersetzt.

Bei einem anderen Ausführungsbeispiel gemäß Fig. 4 enthält die Vorverarbeitung VV anstelle der Filterbank FB eine FFT-Verarbeitung, die aus einem Umsortierspeicher USP, einem Zwischenspeicher ZSP und einem FFT-Prozessor SA besteht.

Bevor die vom Radargerät gelieferten Echosignale entfernungstorweise einer FFT-Verarbeitung unterzogen werden, müssen diese zunächst umsortiert werden. Das Radargerät liefert für jeden Sendeimpuls die Echos aller Entfernungstore. Für die Transformation in den Frequenzbereich wird aber entfernungstorweise ein Block kohärent zu verarbeitender Echos für die Fast-Fourier-Transformation benötigt. Dieser Umsortiervorgang erfolgt im Umsortierspeicher USP. In diesen Speicher werden die Echos aller Entfernungstore eingeschrieben, bis die Anzahl der kohärent zu verarbeitenden Echos aufgelaufen ist. Dann wird dieser Block entfernungstorweise ausgelesen. Während des Auslesevorgangs wird bereits der nächste Block von kohärent zu verarbeitenden Echos eingeschrieben. Diese Blockweise Verarbeitung kann mit unterschiedlicher Pulsfolgefrequenz und/oder Sendefrequenz erfolgen. Neben dieser burstweisen Betriebsart soll der Umsortierspeicher auch eine überlappende Betriebsweise zulassen, derart, daß Blöcke aus N Echos jeweils mit einem Versatz von N/2 ausgelesen werden. Da hierbei jedes Echo zweimal ausgelesen wird, ergibt sich eine Verdopplung der Ausleserate gegenüber der Einschreibrate. Es wird somit aus zwei Blöcken mit den echos von jeweils N Sendepulsen jeweils ein dritter Block gebildet, derart, daß dieser neue Block Echos von Sendepulsen aus den ersten beiden Blöcken enthält.

Ein zwischen dem Umsortierspeicher USP und dem FFT-Prozessor SA angeordneter Zwischenspeicher ZSP dient der Elimination der Zeiten für die Datentransfers vom Umsortierspeicher USP zum FFT-Prozessor SA und vom FFT-Prozessor SA zur Schwellenbildung in der CFAR-Schaltung SST. Der Zwischenspeicher ZSP besteht aus drei einzelnen Teilspeichern. Die besondere Funktion dieses Zwischenspeichers ZSP besteht darin, daß gleichzeitig jeweils in einem Teilspeicher die Echos eines Entfernungstores eingeschrieben, in einem zweiten Speicher die Echos des vorhergehenden Entfernungstores vom FFT-Prozessor verarbeitet werden und aus einem dritten Teilspeicher das bereits in den Frequenzbereich transformierte Ergebnis des wiederum vorhergehenden Entfernungstores ausgelesen und an die Schwellensteuerung SST übergeben wird. Nach der Verarbeitung der Echos eines Entfernungstores werden die Teilspeicher jeweils zyklisch vertauscht.

Für die FFT-Verarbeitung werden zwei Speicher verwendet, von denen einer jeweils ein Teilspeicher des Zwischenspeichers ZSP und der andere der interne Speicher des FFT-Prozessors ist.

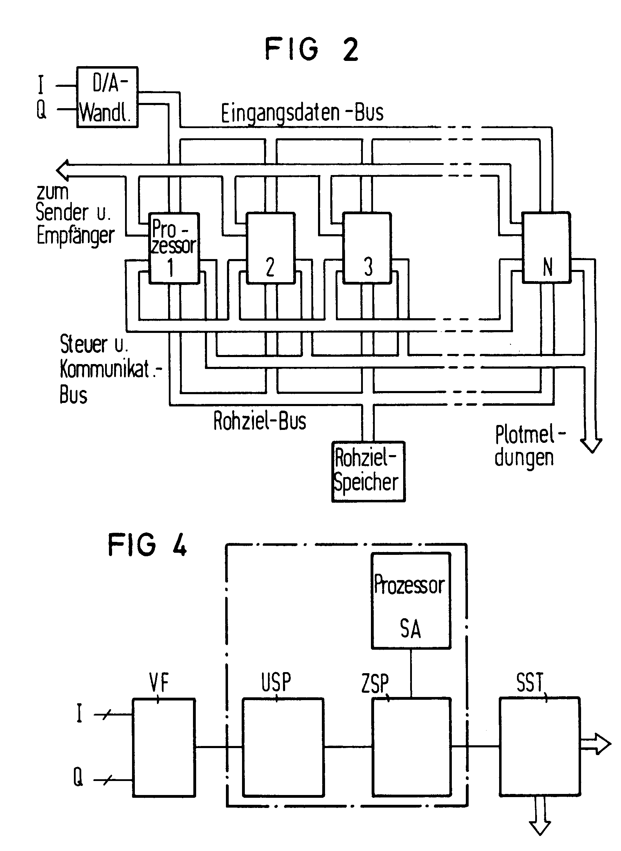

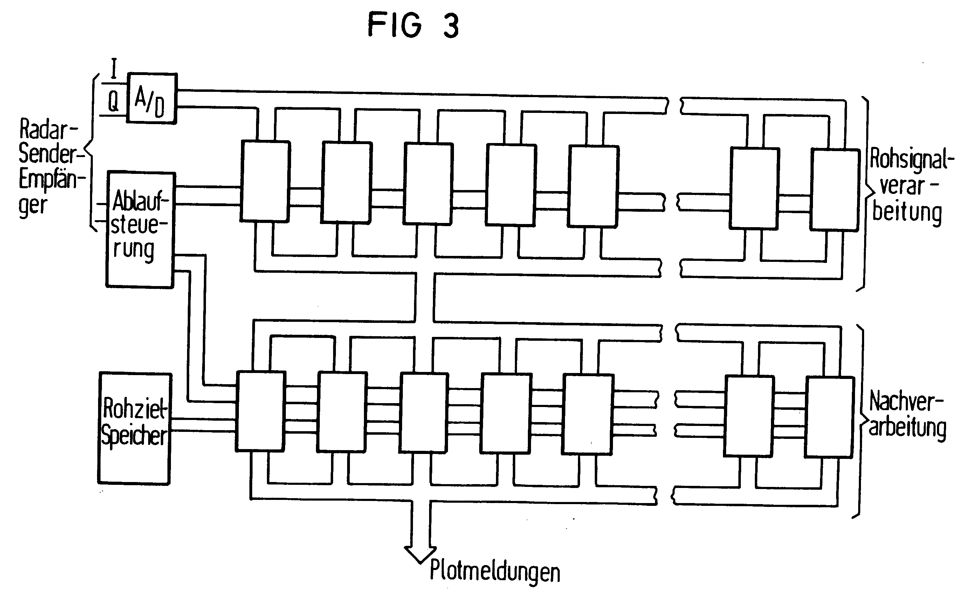

Die Vorverarbeitung zur Analyse der Echos im Dopplerbereich kann ebenso wie die Nachverarbeitung durch ein Multiprozessor-System erfolgen. Die in den Figuren 2 und 3 dargestellten Ausführungsbeispiele zeigen unterschiedliche Architekturen. In Fig. 2 besteht das Multiprozessorsystem aus hardwaremäßig identischen Einzelprozessoren, die über verschiedene Bussysteme untereinander und mit der Umwelt kommunizieren können. Beide Ausführungsformen sind durch einen Rohzielspeicher ergänzt. Die einzelnen Aufgabenbereiche der Radarsignalauswertung wie Vorverarbeitung und Nachverarbeitung werden jeweils von einer Prozessorgruppe bearbeitet. Eine weitere Prozessorgruppe ist zur Erzielung von Fehlertoleranz mit Überwachungs- und Reservefunktionen betreut. Ein Vorteil der Ausführungsform nach Fig. 2 besteht in dem hohen Maß an Fehlertoleranz bei geringem Zusatzaufwand. Die Leistungsfähigkeit läßt sich über die Zahl der Prozessoren an die Erfordernisse anpassen. Fehlertoleranz läßt sich auch bei Einsatz aller vorgesehenen Reserveprozessoren noch weiter aufrecht erhalten, wenn bei weiteren Ausfällen die Reichweite des Radars schrittweise reduziert und damit die Eingangsdatenrate der dann verringerten Verarbeitungsleistung angepaßt wird.

Die Prozessoren sind vorzugsweise für alle Aufgabenbereiche gleich gut geeignet. Daraus ergibt sich, daß eine Optimierung der Prozessoren für eine bestimmte Teilaufgabe, wie z.B. Vorverarbeitung, Nachverarbeitung oder Ablaufsteuerung nicht möglich ist. Bei dieser Ausführung besitzt jede Prozessorbaugruppe alle Busschnittstellen.

Für die Vorverarbeitung im Multiprozessorsystem sind identische Prozessorbaugruppen erforderlich, die über drei Bussysteme parllel geschaltet sind. Dazu gehört der Eingangsdatenbus von den Analog/Digital-Wandlern, der Steuerbus von der Ablaufsteuerung und der Ergebnisbus zur Nachverarbeitung. Die Verarbeitung der Eingangsdaten erfolgt blockweise. Es werden zunächst die Echos einer bestimmten Anzahl von Sendepulsen angesammelt und danach gemeinsam verarbeitet. Jeder Rohsignalprozessor bearbeitet eine bestimmte Anzahl von Entfernungstoren, d.h. einen Entfernungsring. Diese ringförmige Verarbeitung bietet gegenüber einer sektorförmigen Verarbeitung den Vorteil des geringeren Hardware-Aufwandes und einer einfachen Implementierungsmöglichkeit für eine Clutterkarte. Sobald alle Echos eines Blocks im Eingangsspeicher des Rohsignalprozessors aufgelaufen sind, wird für jedes Entfernungstor eine Spektralanalyse durchgeführt und die Ergebnisse werden in einem Zwischenspeicher abgelegt. Nachdem alle Entfernungstore abgearbeitet sind, werden dopplerselektive Schwellen durch Mittelwertbildung und Anhebung dieses Wertes über die Entfernungstore gebildet. Die Spektralwerte und die Schwellen von Entfernungstoren, in denen Schwellenüberschreitungen aufgetreten sind, werden an die Nachverarbeitung weitergegeben. Über den Steuerbus erhalten die Rohsignalprozessoren von der Ablaufsteuerung Informationen über die Art der durchzuführenden Verarbeitung, wie z.B. Anzahl der kohärent verarbeiteten Impulse, kohärenter bzw. inhohärenter Betrieb, durchzuführende Clutteradaption, Schwellenanhebung und Zuweisung der Entfernungstore.

Die Ausführungsform nach Fig. 3 zeigt eine Mölichkeit der Verwendung von Prozessoren für die Vorverarbeitung, bei der für die einzelnen Aufgabenbereiche optimale individuelle Lösungen eingesetzt werden können. Eine derartige Ausbildung bietet die Möglichkeit, die Anzahl der Busschnittstellen zu reduzieren. Das Problem der Fehlertoleranz muß in jedem Teilbereich getrennt gelöst werden.

## Patentansprüche

1. Puls-Doppler-Radargerät zur Entdeckung von Zielen mit einem Quadraturdetektor und Analog-Digitalwandlern für die Quadraturkanäle,
mit einer Vorverarbeitung (VV) für Radarsignale, welche eine Einrichtung zur Dopplerauswertung (FB) durch Filterung der zeitdiskreten Abtastwerte der Echosignale und eine nachgeschaltete Schwellensteuerung (SST) zur starken Reduzierung der Eingangsdatenrate von Radarsignalen in der Nachverarbeitung (NV) gegenüber der in der Vorverarbeitung (NV) durch eine winkel- und entfernungsselektive Schwellenbildung aufweist,
und mit einer Nachverarbeitung (NV) zur Extraktion der Zielinformation,
**dadurch gekennzeichnet,**
daß die Nachverarbeitung (NV) ein über Bus-Systeme parallel geschaltetes Multiprozessorsystem (MPS) mit einer variablen Anzahl von gleichen Prozessorbaugruppen aufweist, denen wenigstens ein gemeinsamer Rohzielspeicher (RSP) zur Aufnahme der von der Vorverarbeitung (VV) abgegebenen Zielmeldungen zugeordnet ist, und wobei im Multiprozessorsystem wenigstens ein Bus zur Dateneingabe von der vorgeschalteten Vorverarbeitung, ein Bus zur Weitergabe der in der Nachverarbeitung gewonnenen Zielmeldungen und ein Bus als Verbindung mit dem gemeinsamen Rohzielspeicher vorgesehen sind.

2. Puls-Doppler-Radargerät nach Anspruch 1,
**dadurch gekennzeichnet,**
daß eine Restclutterkarte (RCK) mit der Schwellensteuerung (SST) und der Nachverarbeitung (NV) verbunden ist.

3. Puls-Doppler-Radargerät nach Anspruch 1 oder 2,
**dadurch gekennzeichnet,**
daß die Vorverarbeitung (VV) ein Multiprozessorsystem aufweist.

## Claims

1. Pulse-Doppler radar apparatus for detecting targets, having a quadrature detector and analog/digital converters for the quadrature channels, having a preprocessor (VV) for radar signals which has a device for Doppler evaluation (FB) by filtering the time-discrete sample values of the echo signals, and a downstream-connected threshold controller (SST) for major reduction of the input data rate of radar signals in the subsequent processor (NV) with respect to that in the preprocessor (VV) by means of threshold formation which is selective in terms of angle and range, and having a subsequent processor (NV) for extraction of the target information, characterised in that the subsequent processor (NV) has a multiprocessor system (MPS) which is connected in parallel via bus systems and has a variable number of identical processor assemblies to which at least one common raw-target memory (RSP) is allocated for recording the target messages emitted from the preprocessor (VV), and at least one bus in the multiprocessor system being provided for data input from the upstream-connected preprocessor, one bus for passing on the target messages obtained in the subsequent processor and one bus as a connection to the common raw-target memory.

2. Pulse-Doppler radar apparatus according to Claim 1, characterised in that a residual clutter board (RCK) is connected to the threshold controller (SST) and the subsequent processor (NV).

3. Pulse-Doppler radar apparatus according to Claim 1 or 2, characterised in that the preprocessor (VV) has a multiprocessor system.

## Revendications

1. Dispositif radar Doppler à impulsions servant à détecter des cibles et comportant un détecteur de quadrature et des convertisseurs analogique/numérique pour les canaux en quadrature,
une unité de prétraitement (VV) pour les signaux du radar, qui possède un dispositif pour réaliser l'évaluation Doppler (FB) par filtrage des valeurs d'échantillonnage, discrètes dans le temps, des signaux d'échos et une unité de commande de seuil (SST) branchée en aval et servant à réduire fortement la cadence des données d'entrée de signaux radar dans une unité de post-traitement (NV) par rapport à la cadence des données dans l'unité de prétraitement (VV) au moyen d'une formation de seuil sélective du point de vue angle et distance, et
une unité de post-traitement (NV) pour l'extraction de l'information des cibles,
caractérisé par le fait
que l'unité de post-traitement (NV) comporte un système à multiprocesseurs (MPS), qui est branché en parallèle par l'intermédiaire de systèmes de bus et comporte un nombre variable de modules de processeurs identiques, auxquels est associée au moins une mémoire commune de cibles brutes (RSP) destinée à recevoir les signalisations de cibles délivrées par l'unité de prétraitement (VV), et que dans le système à multiprocesseurs, au moins un bus est prévu pour l'entrée de données de l'unité de prétraitement branchée en amont, un bus pour la retransmission des signalisations de cibles obtenues dans l'unité de post-traitement et un bus utilisé en tant que liaison avec la mémoire commune de cibles brutes.

2. Appareil radar Doppler à impulsions suivant la revendication 1, caractérisé par le fait qu'une carte d'amas résiduels (RCK) est raccordée à une unité de commande à seuil (SST) et à une unité de post-traitement (NV).

3. Appareil radar Doppler à impulsions suivant la revendication 1 ou 2, caractérisé par le fait que l'unité de prétraitement (VV) possède un système à multiprocesseurs.
